# EUROPEAN PATENT APPLICATION

(11) **EP 4 664 642 A1**
(43) Date of publication of application: **17.12.2025**
(21) Application number: 24182173.5
(22) Date of filing: 14.06.2024
(51) Int. Cl.: H01M 50/271

(54) **A PROTECTIVE COVER, A COVER ASSEMBLY, A BATTERY CELL ASSEMBLY, AND A VEHICLE**

(71) Applicant: VOLVO TRUCK CORPORATION, 405 08 Göteborg (SE)
(72) Inventor: Bhavani Shankar, Vijai Shankar, 414 78 Göteborg (SE); Rout, Dhirendra, 422 54 Göteborg (SE)
(74) Representative: Kransell & Wennborg KB

(57) **Abstract**

The disclosure relates to a protective cover (1) for protecting a battery cell top surface (21) of a battery cell (2), comprising a main protective wall (11) and a side wall (12) protruding downwardly from the main protective wall (11) and extending around an outer perimeter (115) of the main protective wall (11) such that an inner surface (121) of the side wall (12) and the bottom surface (112) of the main protective wall (11) defines a space (S) with a height corresponding to a height of the side wall (12). The disclosure also relates to a cover assembly (4), a battery cell assembly (5), and a vehicle (6).

## Description

### TECHNICAL FIELD

The disclosure relates generally to battery cells and energy storage systems]. In particular aspects, the disclosure relates to a protective cover for protecting a battery cell top surface of a battery cell, a cover assembly for protecting battery cell top surfaces of at least two battery cells, a battery cell assembly, and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A battery cell, also known as an electrochemical battery cell, is used for storing electrical energy. The battery cell may be a standalone cell or it may be part of an energy storage system comprising a plurality of battery cells which are electrically connected. The energy storage system may in some examples be denoted as a battery pack. The battery pack may for example be provided in a vehicle for providing electric power to one or more electric motors for driving the vehicle.

A battery cell may in some situations experience a rapid increase of the cell temperature due to uncontrolled reactions inside the cell, also known as thermal runaway. Hence, there is a strive to develop improved technology which at least partially mitigates the risk of thermal runaway and/or thermal runaway propagation.

### SUMMARY

According to a first aspect of the disclosure, a protective cover for protecting a battery cell top surface of a battery cell is provided. The protective cover has a longitudinal extension along a longitudinal direction, a width extension along a width direction and a height extension along a height direction. The protective cover comprises:
- a main protective wall with an extension in the longitudinal direction and the width direction, and a top surface facing upwardly in the height direction and a bottom surface facing downwardly in the height direction, wherein the main protective wall comprises at least one opening extending therethrough in the height direction and configured to give access to an electric terminal of the battery cell, and wherein the main protective wall further comprises a weakened section which is configured to break when a pressure is applied onto the bottom surface at the weakened section which is above a pressure threshold,
- a side wall protruding downwardly from the main protective wall and extending around an outer perimeter of the main protective wall such that an inner surface of the side wall and the bottom surface of the main protective wall defines a space with a height corresponding to a height of the side wall. The first aspect of the disclosure may seek to provide an improved protective cover which protects the battery cell from thermal runaway propagation, and thus from thermal runaway of the battery cell. A technical benefit may include that the protective cover defines a space which may be sealed so that the battery cell top surface is well protected, while also enabling any gas/particles from the battery cell to be ejected through the protective wall at the weakened section if required. This may result in a more robust and rigid configuration, mitigating the risk of thermal runaway propagation between battery cells.

Optionally in some examples, including in at least one preferred example, the main protective wall, at the top surface, comprises at least one first alignment element associated with the at least one opening and arranged to align a busbar such that the busbar is aligned with the longitudinal direction. A technical benefit may include that a defined location for the busbar is enabled. This may result in a more robust configuration and/or a facilitated manufacturing procedure.

Optionally in some examples, including in at least one preferred example, the at least one first alignment element protrudes outwardly from the top surface in the height direction. A technical benefit may include that the outwardly protruding first alignment element more easily interacts with the busbar.

Optionally in some examples, including in at least one preferred example, the at least one first alignment element is provided at a corner portion of the at least one opening. A technical benefit may include that the first alignment element will better align the busbar with the opening. Another technical benefit may include that the protective cover, with the first alignment element at the corner portion, is easy to manufacture.

Optionally in some examples, including in at least one preferred example, the main protective wall, at the top surface, comprises at least one second alignment element arranged to align auxiliary electronic equipment such that the auxiliary electronic equipment is aligned with the longitudinal direction. A technical benefit may include that a defined location for the auxiliary electronic equipment is enabled. This may result in a more robust configuration and/or a facilitated manufacturing procedure.

Optionally in some examples, including in at least one preferred example, the at least one second alignment element protrudes outwardly from the top surface in the height direction, wherein optionally the at least one second alignment element is formed as a pin. A technical benefit may include that the outwardly protruding second alignment element interacts more easily with the auxiliary electronic equipment.

Optionally in some examples, including in at least one preferred example, the at least one opening is associated with an outer lateral end of the protective cover, as seen in the width direction, and the at least one second alignment element is provided on the top surface at a position in-between the at least one opening and the associated outer lateral end. A technical benefit may include that the auxiliary electronic equipment is provided at a more preferred location on the protective cover, e.g., such that it does not interfere with the busbar and/or with any other part.

Optionally in some examples, including in at least one preferred example, the at least one opening has an extension in the longitudinal direction which corresponds to at least 50 % of a maximum length of the protective cover in the longitudinal direction. A technical benefit may include that the protective cover is adapted for protecting one battery cell. Another technical benefit may include that the at least one opening will be better adapted for giving access to the electric terminal of the battery cell.

Optionally in some examples, including in at least one preferred example, the protective cover further comprises at least one battery cell attachment portion which is arranged to attach the protective cover to a battery cell such that the bottom surface faces the battery cell top surface. A technical benefit may include an improved attachment to the battery cell.

Optionally in some examples, including in at least one preferred example, the at least one battery cell attachment portion protrudes downwardly from the bottom surface in the height direction, and is optionally provided adjacent the at least one opening, for example such that the at least one battery cell attachment portion forms an extension of the at least one opening, as seen in the height direction. A technical benefit may include an improved attachment, such as an improved attachment close to the electric terminal.

Optionally in some examples, including in at least one preferred example, the at least one battery cell attachment portion is configured to provide a snap-fit connection to the battery cell. A technical benefit may include a facilitated attachment to the battery cell.

Optionally in some examples, including in at least one preferred example, the main protective wall, at the top surface, comprises a first attachment portion and a second attachment portion which are arranged to attach an auxiliary protective cover for covering the at least one opening from above, wherein the first attachment portion is provided on a first lateral side of the at least one opening and the second attachment portion is provided on a second lateral side of the at least one opening which is opposite to the first lateral side, as seen in the width direction. A technical benefit may include that an auxiliary protective cover may be attached to the protective cover such that e.g. the electric terminal of the battery cell is protected.

According to a second aspect of the disclosure, a cover assembly for protecting battery cell top surfaces of at least two battery cells is provided. The cover assembly comprises at least two protective covers, wherein each protective cover is a protective cover according to the first aspect of the disclosure and with a first and second attachment portions as mentioned in the above. The cover assembly further comprises an auxiliary protective cover which is attached to each protective cover via the first and second attachment portions of each protective cover, and wherein the auxiliary protective cover covers the at least one opening of each protective cover. The second aspect of the disclosure may seek to provide an improved cover assembly which protects the battery cells from thermal runaway propagation, and thus from thermal runaway of the battery cell. Advantages and technical benefits of the second aspect of the disclosure are analogous to the advantages and technical benefits of the first aspect of the disclosure.

Optionally in some examples, including in at least one preferred example, the auxiliary protective cover is attached to each protective cover by a snap-fit connection. A technical benefit may include a facilitated attachment of the auxiliary cover. A snap-fit connection may herein mean that a portion of one part will, by a biasing force, snap in engagement with a corresponding portion of another part.

Optionally in some examples, including in at least one preferred example, a width of each protective cover in the width direction is longer than a length of each protective cover in the longitudinal direction, wherein the at least two protective covers are arranged one after the other along a longitudinal direction of the cover assembly which corresponds to the longitudinal direction of each protective cover of the at least two protective covers, and wherein the auxiliary protective cover extends over the at least two protective covers in the longitudinal direction of the cover assembly. A technical benefit may include a compact configuration which protects the battery cells. The battery cells as disclosed herein are preferably prismatic battery cells.

Optionally in some examples, including in at least one preferred example, each one of the at least two protective covers comprises at least one second alignment element as disclosed herein, and the auxiliary protective cover further covers the at least one second alignment element of each protective cover. A technical benefit may include improved protection of the second alignment element and the auxiliary electronic equipment.

According to a third aspect of the disclosure, a battery cell assembly is provided. The battery cell assembly comprises:
at least one battery cell with a battery cell top surface, and at least one protective cover according to any one of the examples of the first aspect of the disclosure which is attached to the at least one battery cell such that it covers the battery cell top surface and such that an electric terminal of the at least one battery cell is accessible via the at least one opening; or
at least two battery cells with a respective battery cell top surface, and a cover assembly according to any one of the examples of the second aspect of the disclosure, wherein each protective cover of the at least two protective covers is attached to a respective battery cell of the at least two battery cells such that it covers the respective battery cell top surface and such that an electric terminal of the respective battery cell is accessible via the at least one opening. Advantages and technical benefits of the third aspect of the disclosure are analogous to the advantages and effects of the first and second aspects of the disclosure.

Optionally in some examples, including in at least one preferred example, the battery cell assembly further comprises at least one busbar which is aligned by the at least one first alignment element with respect to the longitudinal direction.

Optionally in some examples, including in at least one preferred example, the battery cell assembly further comprises an auxiliary electronic equipment, such as a flexible printed circuit, which is aligned by the at least one second alignment element with respect to the longitudinal direction.

According to a fourth aspect of the disclosure, a vehicle comprising a battery cell assembly according to the third aspect of the disclosure is provided. Advantages and technical benefits of the fourth aspect of the disclosure are analogous to the advantages and effects of the first, second and third aspects of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2** is an exemplary protective cover in a perspective view according to an example.
**FIG. 3** is an exemplary protective cover, cover assembly and battery cell assembly in a perspective and sectional view according to an example.
**FIG. 4** is an exemplary protective cover, cover assembly and battery cell assembly in a perspective view according to an example.
**FIG. 5** is an exemplary protective cover and battery cell assembly in a perspective view according to an example.

The drawings are not necessarily drawn to scale. It shall also be noted that some details in the drawings may be exaggerated in order to better describe and illustrate the particular example. Like reference characters refer to like elements throughout the description, unless expressed otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

An aim of the present disclosure is to provide a protective cover, a cover assembly, a battery cell assembly, and/or a vehicle which at least partially alleviates one or more drawbacks of the prior art, or which at least provide suitable alternatives. For example, by the present disclosure, an improved protective cover which protects the battery cell from thermal runaway propagation may be achieved, and thus from thermal runaway of the battery cell. A technical benefit may include that the protective cover is adapted for effectively protecting the top surface of the battery cell while also facilitating mounting of the protective cover to the battery cell, and/or facilitating alignment of busbars/auxiliary electronic equipment with respect to the protective cover/battery cell. This may result in a more cost-efficient configuration, e.g., a facilitated assembly procedure which is more time efficient.

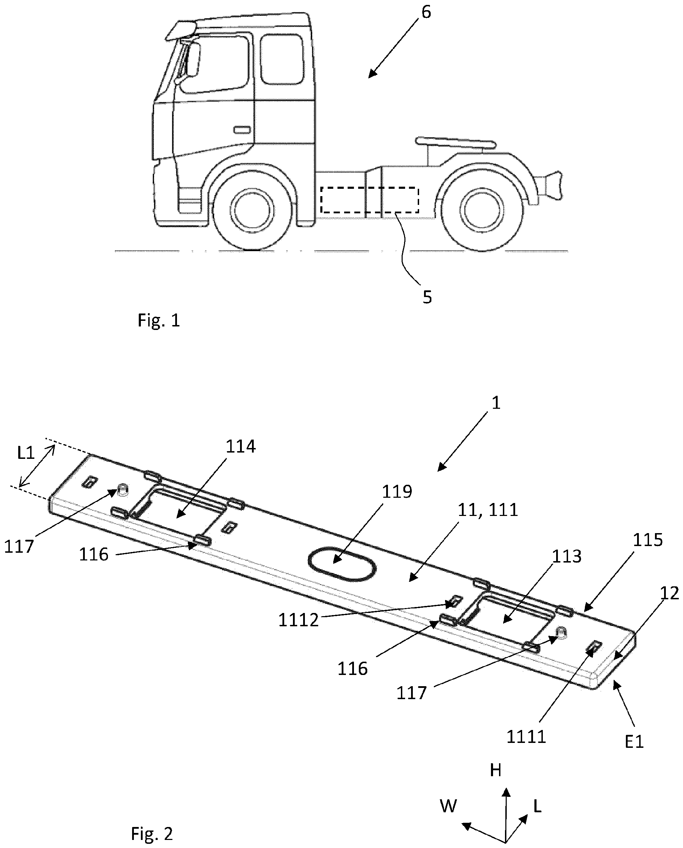

**FIG. 1** is an exemplary vehicle 6 in a side view according to an example. The vehicle 6 is a truck for towing one or more trailers (not shown). It shall however be understood that the vehicle may be any other type of vehicle, such as another type of truck, a bus, a passenger car, and construction equipment, such as an excavator, a wheel loader, etc. The vehicle 6 may be driven by a user (not shown) and/or be at least partly automatically driven, i.e., it may be a vehicle comprising autonomous driving capabilities. The vehicle 6 may be a fully electric vehicle or a hybrid vehicle. As such, the vehicle 6 may comprise one or more electric motors/generators and/or an internal combustion engine (not shown) for driving the vehicle 6. The vehicle 6 comprises a battery cell assembly 5 according to examples disclosed herein. The battery cell assembly 5 is preferably used for powering the one or more electric motors/generators, and may be part of an energy storage system which comprises a plurality of electrically connected battery cells. Even though the battery cell assembly 5 as disclosed herein may be used in a vehicle, it shall be noted that the battery cell assembly 5 may also be used in stationary machinery and/or in a building.

**FIG. 2** is an exemplary protective cover 1 in a perspective view according to an example. The protective cover 1 is configured to protect a battery cell top surface 21 of a battery cell 2 (not shown), which will be further described in the below. The protective cover 1 has a longitudinal extension along a longitudinal direction L, a width extension along a width direction W and a height extension along a height direction H. The directions are perpendicular to each other and may also be referred to as a Cartesian coordinate system. In the shown example, the protective cover 1 is oriented so that its top side is shown.

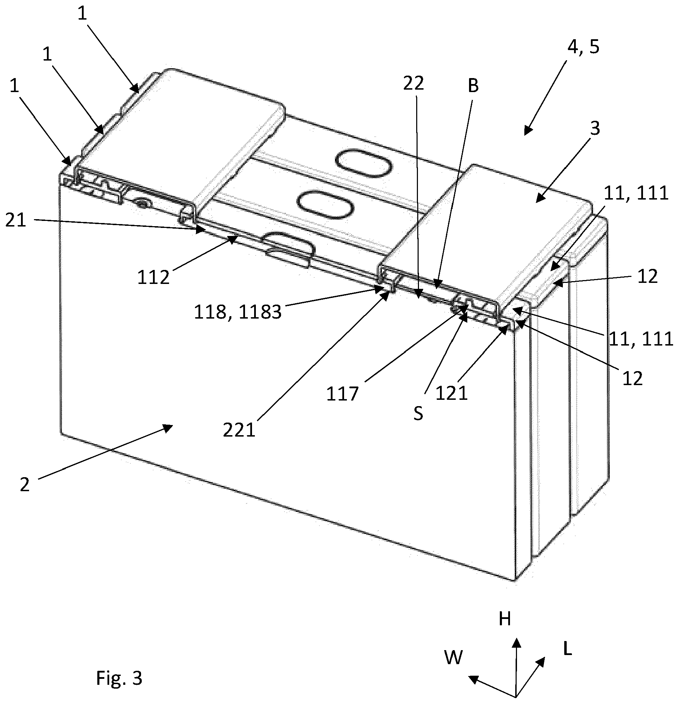

The protective cover 1 comprises:
- a main protective wall 11 with an extension in the longitudinal direction L and the width direction W, and a top surface 111 facing upwardly in the height direction H and a bottom surface 112 (see Fig. 3) facing downwardly in the height direction H. The main protective wall 11 comprises at least one opening 113, 114 extending therethrough in the height direction H and configured to give access to an electric terminal 22 of the battery cell 2, and the main protective wall 11 further comprises a weakened section 119 which is configured to break when a pressure is applied onto the bottom surface 112 at the weakened section 119 which is above a pressure threshold. In the shown example, there are two openings 113,114 for giving access to two electric terminals 22.

A weakened section means herein that the section is weaker relative the other portions of the main protective wall 11. In some examples, the weaker section 119 is formed by a wall portion which is thinner than surrounding portions of the main protective wall 11. Additionally, or alternatively, the weaker section may be formed by a material different from a material of the surrounding portions of the main protective wall 11. Additionally, or alternatively, the weakened section 119 may be accomplished by providing a break line which will break and separate the weakened section 119 from the protective cover 1 when a pressure above the pressure threshold is applied thereon. The weakened section 119 may as shown be formed as an oval or round section. Other forms are also possible, such as a square or rectangular form.

The protective cover 1 further comprises a side wall 12 protruding downwardly from the main protective wall 11 in the height direction H and extending around an outer perimeter 115 of the main protective wall 11 such that an inner surface 121 of the side wall 12 and the bottom surface 112 of the main protective wall 11 defines a space S with a height corresponding to a height of the side wall 12 (see FIG. 3). As shown, the protective cover 1 may have a rectangular perimeter profile, as seen from above in the height direction H. The side wall 12 is preferably configured such that a sealed space S is formed between the battery cell top surface 21 and the bottom surface 112.

As shown in FIG. 2, the main protective wall 11, at the top surface 111, may comprise at least one first alignment element 116 associated with the at least one opening 113 and arranged to align a busbar B (not shown in FIG. 2) such that the busbar B is aligned with the longitudinal direction L. As shown, the at least one first alignment element 116 preferably protrudes outwardly from the top surface 111 in the height direction H.

Additionally, or alternatively, the at least one first alignment element 116 may as shown be provided at a corner portion of the at least one opening 113, 114. In the shown example, one first alignment element 116 is provided at each corner portion of the at least one opening 113, 114. More specifically, in the shown example, the at least one opening 113, 114 has four corner portions, and a respective first alignment portions 116 is provided at each corner portion. This may result in improved alignment of the busbar B.

The main protective wall 11, at the top surface 111, may as shown comprise at least one second alignment element 117 arranged to align auxiliary electronic equipment FPC (not shown in FIG. 2) such that the auxiliary electronic equipment FPC is aligned with the longitudinal direction L. The at least one second alignment element 117 preferably protrudes outwardly from the top surface 111 in the height direction H. Optionally, as shown, the at least one second alignment element 117 is formed as a pin.

As further shown in FIG. 2, the at least one opening 113 may be associated with an outer lateral end E1 of the protective cover 1, as seen in the width direction W, and the at least one second alignment element 117 may be provided on the top surface 111 at a position in-between the at least one opening 113 and the associated outer lateral end E1. By an associated outer lateral end means herein that the opening 113 is closer to the outer lateral end E1 than to the outer lateral end on the other side of the protective cover 1, as seen in the width direction W.

The at least one opening 113, 114 may as shown have an extension in the longitudinal direction L which corresponds to at least 50 % of a maximum length L1 of the protective cover 1 in the longitudinal direction L.

**FIG. 3** is an exemplary protective cover 1, cover assembly 4 and battery cell assembly 5 in a perspective and sectional view according to an example.

As shown in FIG. 3, the protective cover 1 may further comprise at least one battery cell attachment portion 118 which is arranged to attach the protective cover 1 to a battery cell 2 such that the bottom surface 112 faces the battery cell top surface 21. In the shown example, the at least one battery cell attachment portion 118 protrudes downwardly from the bottom surface 112 in the height direction H, and is provided adjacent the at least one opening 113, such that the at least one battery cell attachment portion 118 forms an extension of the at least one opening 113, as seen in the height direction H.

The at least one battery cell attachment portion 118 may as further shown be configured to provide a snap-fit connection to the battery cell 2. The at least one battery cell attachment portion 118 may for example be configured to flex in a direction which is extending in a plane defined by the longitudinal direction L and the width direction W. In the shown example, the flexing direction extends along the width direction W. By way of example, the at least one battery cell attachment portion 118 as disclosed herein is preferably configured to flex from a default position. The default position is preferably a position when the at least one battery cell attachment portion 118 protrudes downwardly from the bottom surface 112 in a direction which is perpendicular to the bottom surface 112.

As shown in FIG. 3, the at least one electric terminal 22, on a side surface thereof, may comprise a recess 221, and/or a protrusion (not shown), adapted to connect with at least one battery cell attachment portion 118 of the at least one battery cell attachment portion 118. Accordingly, the at least one battery cell attachment portion 118 may comprise a corresponding protrusion/recess 1183 which is configured to interact with the recess 221, and/or protrusion, of the electric terminal 22. Thereby, the protrusion/recess of the at least one battery cell attachment portion 118 may lock the protective cover 1 to the battery cell 2 via the corresponding recess/protrusion of the electric terminal 22.

With reference to e.g. FIG 2 and 3, the main protective wall 11, at the top surface 111, may comprise a first attachment portion 1111 and a second attachment portion 1112 which are arranged to attach an auxiliary protective cover 3 for covering the at least one opening 113 from above, wherein the first attachment portion 1111 is provided on a first lateral side of the at least one opening 113 and the second attachment portion 1112 is provided on a second lateral side of the at least one opening 113 which is opposite to the first lateral side, as seen in the width direction W. The first and second attachment portions 1111, 1112 are in these examples an aperture for receiving a protruding connection portion of the auxiliary protective cover 3. A snap-fit connection may also be provided for connecting the auxiliary protective cover 3.

Hence, in view of the above, FIG. 3 also depicts a cover assembly 4 for protecting battery cell top surfaces 21 of at least two battery cells 2. The battery cells 2 are stacked after one another along the longitudinal direction L.

The cover assembly 4 comprises at least two protective covers 1, wherein each protective cover 1 is a protective cover according to examples of the first aspect of the disclosure, and further comprises an auxiliary protective cover 3 which is attached to each protective cover 1 via the first and second attachment portions 1111, 1112 of each protective cover 1. The auxiliary protective cover 3 covers the at least one opening 113 of each protective cover 1. Two auxiliary covers 3 may as shown be used for covering each opening 113, 114 of the battery cells 2.

A width of each protective cover 1 in the width direction W may as shown be longer than a length of each protective cover 1 in the longitudinal direction L, wherein the at least two protective covers 1 are arranged one after the other along a longitudinal direction L of the cover assembly 4 which corresponds to the longitudinal direction L of each protective cover 1 of the at least two protective covers 1, and wherein the auxiliary protective cover 3 extends over the at least two protective covers 1 in the longitudinal direction L of the cover assembly 4.

Each one of the at least two protective covers 1 may as shown comprise at least one second alignment element 117, wherein the auxiliary protective cover 3 further covers the at least one second alignment element 117 of each protective cover 1.

FIG. 3 also depicts a battery cell assembly 5. The battery cell assembly 5 comprises at least one battery cell 2 with a battery cell top surface 21, and at least one protective cover 1. As shown, the at least one battery cell 2 is preferably a prismatic battery cell, even though in some other examples also a cylindrical battery cell may be used. The width of the prismatic battery cell 2 in the width direction W is in the shown example larger than a length of the prismatic battery cell 2 in the longitudinal direction L. The prismatic battery cell 2 is box-shaped, i.e. comprising four side surfaces connecting a bottom surface with the battery cell top surface 21.

The protective cover 1 is attached to the at least one battery cell 2 such that it covers the battery cell top surface 21 and such that an electric terminal 22 of the at least one battery cell 2 is accessible via the at least one opening 113.

As shown, the battery cell assembly 5 may comprise at least two battery cells 2 with a respective battery cell top surface 21, and a cover assembly 4, wherein each protective cover 1 of the at least two protective covers 1 is attached to a respective battery cell 2 of the at least two battery cells 2 such that it covers the respective battery cell top surface 21 and such that an electric terminal 22 of the respective battery cell 2 is accessible via the at least one opening 113.

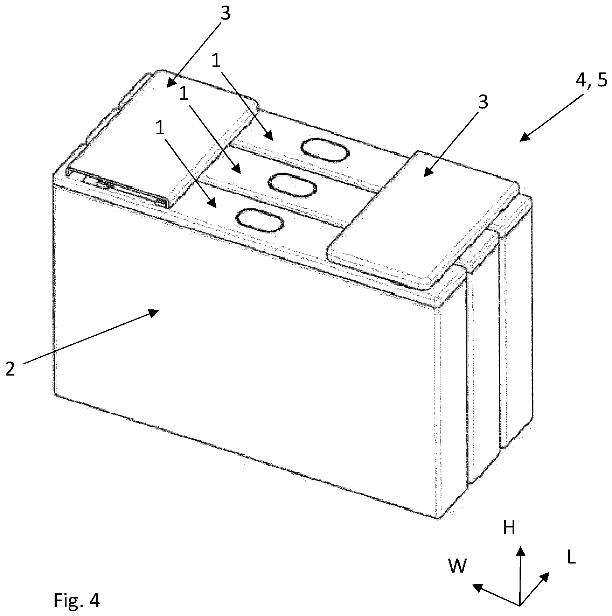

**FIG. 4** is an exemplary protective cover 1 and battery cell assembly 5 in a perspective view according to an example when two auxiliary covers 3 are mounted onto three protective covers 1 along the longitudinal direction L.

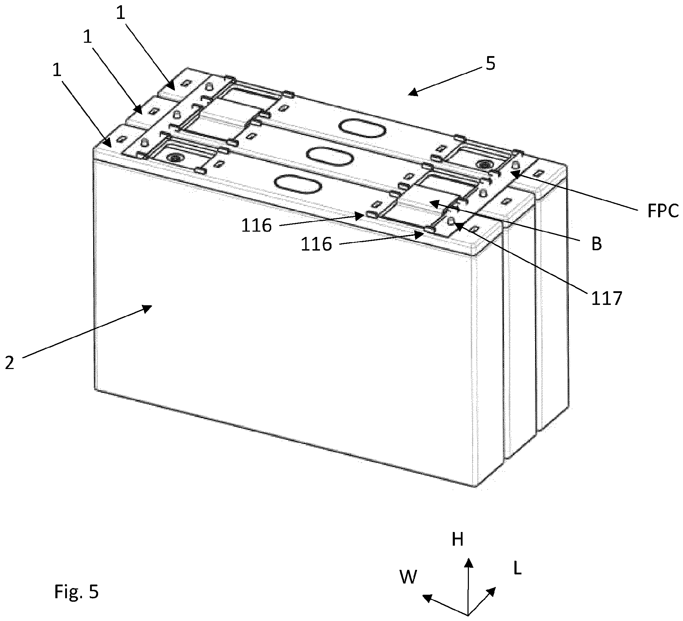

**FIG. 5** is an exemplary protective cover 1 and battery cell assembly 5 in a perspective view according to an example when not any auxiliary covers 3 are mounted to the protective covers 1. With reference to e.g. FIG. 5, the battery cell assembly 5 may further comprise at least one busbar B which is aligned by the at least one first alignment element 116 with respect to the longitudinal direction L.

The battery cell assembly 5 may as further shown comprise an auxiliary electronic equipment, such as a flexible printed circuit FPC, which is aligned by the at least one second alignment element 117 with respect to the longitudinal direction L.

In the following, possible features and feature combinations of the present disclosure are presented as a list of Examples.

Example 1: A protective cover (1) for protecting a battery cell top surface (21) of a battery cell (2), the protective cover (1) having a longitudinal extension along a longitudinal direction (L), a width extension along a width direction (W) and a height extension along a height direction (H), the protective cover (1) comprising:
- a main protective wall (11) with an extension in the longitudinal direction (L) and the width direction (W), and a top surface (111) facing upwardly in the height direction (H) and a bottom surface (112) facing downwardly in the height direction (H), wherein the main protective wall (11) comprises at least one opening (113, 114) extending therethrough in the height direction (H) and configured to give access to an electric terminal (22) of the battery cell (2), and wherein the main protective wall (11) further comprises a weakened section (119) which is configured to break when a pressure is applied onto the bottom surface (112) at the weakened section (119) which is above a pressure threshold,
- a side wall (12) protruding downwardly from the main protective wall (11) and extending around an outer perimeter (115) of the main protective wall (11) such that an inner surface (121) of the side wall (12) and the bottom surface (112) of the main protective wall (11) defines a space (S) with a height corresponding to a height of the side wall (12).

Example 2: The protective cover (1) according to Example 1, wherein the main protective wall (11), at the top surface (111), comprises at least one first alignment element (116) associated with the at least one opening (113) and arranged to align a busbar (B) such that the busbar (B) is aligned with the longitudinal direction (L).

Example 3: The protective cover (1) according to Example 2, wherein the at least one first alignment element (116) protrudes outwardly from the top surface (111) in the height direction (H).

Example 4: The protective cover (1) according to any one of Examples 2 or 3, wherein the at least one first alignment element (116) is provided at a corner portion of the at least one opening (113, 114).

Example 5: The protective cover (1) according to any one of the preceding Examples, wherein the main protective wall (11), at the top surface (111), comprises at least one second alignment element (117) arranged to align auxiliary electronic equipment (FPC) such that the auxiliary electronic equipment is aligned with the longitudinal direction (L).

Example 6: The protective cover (1) according to Example 5, wherein the at least one second alignment element (117) protrudes outwardly from the top surface (111) in the height direction (H), wherein optionally the at least one second alignment element (117) is formed as a pin.

Example 7: The protective cover (1) according to any one of Examples 5 or 6, wherein the at least one opening (113) is associated with an outer lateral end (E1) of the protective cover (1), as seen in the width direction (W), and wherein the at least one second alignment element (117) is provided on the top surface (111) at a position in-between the at least one opening (113) and the associated outer lateral end (E1).

Example 8: The protective cover (1) according to any one of the preceding Examples, wherein the at least one opening (113) has an extension in the longitudinal direction (L) which corresponds to at least 50 % of a maximum length (L1) of the protective cover (1) in the longitudinal direction (L).

Example 9: The protective cover (1) according to any one of the preceding Examples, further comprising at least one battery cell attachment portion (118) which is arranged to attach the protective cover (1) to a battery cell (2) such that the bottom surface (112) faces the battery cell top surface (21).

Example 10: The protective cover (1) according to Example 9, wherein the at least one battery cell attachment portion (118) protrudes downwardly from the bottom surface (112) in the height direction (H), and is optionally provided adjacent the at least one opening (113), for example such that the at least one battery cell attachment portion (118) forms an extension of the at least one opening (113), as seen in the height direction (H).

Example 11: The protective cover (1) according to any one of Examples 9 or 10, wherein the at least one battery cell attachment portion (118) is configured to provide a snap-fit connection to the battery cell (2).

Example 12: The protective cover (1) according to any one of the preceding Examples, wherein the main protective wall (11), at the top surface (111), comprises a first attachment portion (1111) and a second attachment portion (1112) which are arranged to attach an auxiliary protective cover (3) for covering the at least one opening (113) from above, wherein the first attachment portion (1111) is provided on a first lateral side of the at least one opening (113) and the second attachment portion (1112) is provided on a second lateral side of the at least one opening (113) which is opposite to the first lateral side, as seen in the width direction (W).

Example 13: A cover assembly (4) for protecting battery cell top surfaces (21) of at least two battery cells (2), the cover assembly (4) comprising at least two protective covers, wherein each protective cover (1) is a protective cover (1) according to Example 12, and further comprising an auxiliary protective cover (3) which is attached to each protective cover (1) via the first and second attachment portions (1111, 1112) of each protective cover (1), and wherein the auxiliary protective cover (3) covers the at least one opening (113) of each protective cover (1).

Example 14: The cover assembly (4) according to Example 13, wherein the auxiliary protective cover (3) is attached to each protective cover (1) by a snap-fit connection.

Example 15: The cover assembly (4) according to any one of Examples 13 or 14, wherein a width of each protective cover (1) in the width direction (W) is longer than a length of each protective cover (1) in the longitudinal direction (L), wherein the at least two protective covers (1) are arranged one after the other along a longitudinal direction (L) of the cover assembly (4) which corresponds to the longitudinal direction (L) of each protective cover (1) of the at least two protective covers (1), and wherein the auxiliary protective cover (3) extends over the at least two protective covers (1) in the longitudinal direction (L) of the cover assembly (4).

Example 16: The cover assembly (4) according to any one of Examples 13-15, wherein each one of the at least two protective covers (1) comprises at least one second alignment element (117) according to any one of claims 5-7, and wherein the auxiliary protective cover (3) further covers the at least one second alignment element (117) of each protective cover (1).

Example 17: A battery cell assembly (5) comprising:
at least one battery cell (2) with a battery cell top surface (21), and at least one protective cover (1) according to any one of Examples 1-12 which is attached to the at least one battery cell (2) such that it covers the battery cell top surface (21) and such that an electric terminal (22) of the at least one battery cell (2) is accessible via the at least one opening (113); or
at least two battery cells (2) with a respective battery cell top surface (21), and a cover assembly (4) according to any one of Examples 13-16, wherein each protective cover (1) of the at least two protective covers (1) is attached to a respective battery cell (2) of the at least two battery cells (2) such that it covers the respective battery cell top surface (21) and such that an electric terminal (22) of the respective battery cell (2) is accessible via the at least one opening (113).

Example 18: The battery cell assembly (5) according to claim 17, when also being dependent on any one of claims 2-4, further comprising at least one busbar (B) which is aligned by the at least one first alignment element (116) with respect to the longitudinal direction (L).

Example 19: The battery cell assembly (5) according to any one of Examples 17 or 18, when also being dependent on any one of Examples 5-7, further comprising an auxiliary electronic equipment, such as a flexible printed circuit (FPC), which is aligned by the at least one second alignment element (117) with respect to the longitudinal direction (L).

Example 20: A vehicle (6) comprising a battery assembly (5) according to any one of Examples 17-19.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A protective cover (1) for protecting a battery cell top surface (21) of a battery cell (2), the protective cover (1) having a longitudinal extension along a longitudinal direction (L), a width extension along a width direction (W) and a height extension along a height direction (H), the protective cover (1) comprising:
- a main protective wall (11) with an extension in the longitudinal direction (L) and the width direction (W), and a top surface (111) facing upwardly in the height direction (H) and a bottom surface (112) facing downwardly in the height direction (H), wherein the main protective wall (11) comprises at least one opening (113, 114) extending therethrough in the height direction (H) and configured to give access to an electric terminal (22) of the battery cell (2), and wherein the main protective wall (11) further comprises a weakened section (119) which is configured to break when a pressure is applied onto the bottom surface (112) at the weakened section (119) which is above a pressure threshold,
- a side wall (12) protruding downwardly from the main protective wall (11) and extending around an outer perimeter (115) of the main protective wall (11) such that an inner surface (121) of the side wall (12) and the bottom surface (112) of the main protective wall (11) defines a space (S) with a height corresponding to a height of the side wall (12).

2. The protective cover (1) according to claim 1, wherein the main protective wall (11), at the top surface (111), comprises at least one first alignment element (116) associated with the at least one opening (113) and arranged to align a busbar (B) such that the busbar (B) is aligned with the longitudinal direction (L).

3. The protective cover (1) according to claim 2, wherein the at least one first alignment element (116) protrudes outwardly from the top surface (111) in the height direction (H).

4. The protective cover (1) according to any one of claims 2 or 3, wherein the at least one first alignment element (116) is provided at a corner portion of the at least one opening (113, 114).

5. The protective cover (1) according to any one of the preceding claims, wherein the main protective wall (11), at the top surface (111), comprises at least one second alignment element (117) arranged to align auxiliary electronic equipment (FPC) such that the auxiliary electronic equipment is aligned with the longitudinal direction (L).

6. The protective cover (1) according to claim 5, wherein the at least one second alignment element (117) protrudes outwardly from the top surface (111) in the height direction (H), wherein optionally the at least one second alignment element (117) is formed as a pin.

7. The protective cover (1) according to any one of the preceding claims, further comprising at least one battery cell attachment portion (118) which is arranged to attach the protective cover (1) to a battery cell (2) such that the bottom surface (112) faces the battery cell top surface (21).

8. The protective cover (1) according to claim 7, wherein the at least one battery cell attachment portion (118) protrudes downwardly from the bottom surface (112) in the height direction (H), and is optionally provided adjacent the at least one opening (113), for example such that the at least one battery cell attachment portion (118) forms an extension of the at least one opening (113), as seen in the height direction (H).

9. The protective cover (1) according to any one of the preceding claims, wherein the main protective wall (11), at the top surface (111), comprises a first attachment portion (1111) and a second attachment portion (1112) which are arranged to attach an auxiliary protective cover (3) for covering the at least one opening (113) from above, wherein the first attachment portion (1111) is provided on a first lateral side of the at least one opening (113) and the second attachment portion (1112) is provided on a second lateral side of the at least one opening (113) which is opposite to the first lateral side, as seen in the width direction (W).

10. A cover assembly (4) for protecting battery cell top surfaces (21) of at least two battery cells (2), the cover assembly (4) comprising at least two protective covers, wherein each protective cover (1) is a protective cover (1) according to claim 9, and further comprising an auxiliary protective cover (3) which is attached to each protective cover (1) via the first and second attachment portions (1111, 1112) of each protective cover (1), and wherein the auxiliary protective cover (3) covers the at least one opening (113) of each protective cover (1).

11. The cover assembly (4) according to claim 10, wherein the auxiliary protective cover (3) is attached to each protective cover (1) by a snap-fit connection.

12. The cover assembly (4) according to any one of claims 10 or 11, wherein a width of each protective cover (1) in the width direction (W) is longer than a length of each protective cover (1) in the longitudinal direction (L), wherein the at least two protective covers (1) are arranged one after the other along a longitudinal direction (L) of the cover assembly (4) which corresponds to the longitudinal direction (L) of each protective cover (1) of the at least two protective covers (1), and wherein the auxiliary protective cover (3) extends over the at least two protective covers (1) in the longitudinal direction (L) of the cover assembly (4).

13. The cover assembly (4) according to any one of claims 10-12, wherein each one of the at least two protective covers (1) comprises at least one second alignment element (117) according to any one of claims 5-6, and wherein the auxiliary protective cover (3) further covers the at least one second alignment element (117) of each protective cover (1).

14. A battery cell assembly (5) comprising:
at least one battery cell (2) with a battery cell top surface (21), and at least one protective cover (1) according to any one of claims 1-9 which is attached to the at least one battery cell (2) such that it covers the battery cell top surface (21) and such that an electric terminal (22) of the at least one battery cell (2) is accessible via the at least one opening (113); or
at least two battery cells (2) with a respective battery cell top surface (21), and a cover assembly (4) according to any one of claims 10-13, wherein each protective cover (1) of the at least two protective covers (1) is attached to a respective battery cell (2) of the at least two battery cells (2) such that it covers the respective battery cell top surface (21) and such that an electric terminal (22) of the respective battery cell (2) is accessible via the at least one opening (113).

15. A vehicle (6) comprising a battery assembly (5) according to claim 14.
